(19) Europäisches Patentamt
European Patent Office
Office européen des brevets

(11) **EP 2 159 246 A1**

(12) **EUROPÄISCHE PATENTANMELDUNG**

(43) Veröffentlichungstag:
**03.03.2010 Patentblatt 2010/09**

(51) Int Cl.:
**C08G 63/16** *(2006.01)*  **C08G 63/80** *(2006.01)*
**C08L 67/02** *(2006.01)*

(21) Anmeldenummer: **09162050.0**

(22) Anmeldetag: **05.06.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(30) Priorität: **29.08.2008 DE 102008044487**

(71) Anmelder: **Lurgi Zimmer GmbH**
**60295 Frankfurt am Main (DE)**

(72) Erfinder:
• **Otto, Brigitta Dr.**
**14715, Milow (DE)**

• **Linke, Rainer**
**35510, Butzbach/Bodenrod (DE)**
• **Schmidt, Oliver**
**63505, Langenselbold (DE)**

(74) Vertreter: **Meyer-Dulheuer, Karl-Hermann**
**Dr. Meyer- Dulheuer & Partner**
**Patentanwaltskanzlei**
**Mainzer-Landstrasse 69-71**
**60329 Frankfurt am Main (DE)**

Bemerkungen:
Geänderte Patentansprüche gemäss Regel 137(2) EPÜ.

(54) **Verfahren zur Herstellung von Polymeren mit neutralem Farbton und die damit hergestellten Polymere und ihre Verwendung**

(57) Die Erfindung betrifft ein Verfahren zur Herstellung von Polymeren mit neutralem Farbton. Die Besonderheit des Verfahrens besteht in der Möglichkeit, die a- und b-Farbwerte im Lab-Farbraum des Polymers unabhängig voneinander zu korrigieren. Gelöst wird die Aufgabe durch das erfindungsgemäße Verfahren zur Herstellung von Polymeren mit neutralem Farbton in einer oder mehreren Reaktionsstufen, wobei dem Prozess an einer Stelle vor Eintritt in die letzte Polyreaktionsstufe ein blauer und/oder roter Farbstoff zugegeben wird, **dadurch gekennzeichnet, dass** die Einstellung eines neutralen Farbtons des Polymers, die bei einer Gesamtfarbstoffkonzentration im Polymer von maximal 3 ppm, bevorzugt maximal 2 ppm, besonders bevorzugt maximal 1 ppm und einem Anteil des blauen Farbstoffes in der Farbstoffmischung von mindestens 50 Gew.-% durchgeführt wird, durch die unabhängige Anpassung der a- und b-Farbwerte im Lab-Farbraum erfolgt und die folgenden Schritte umfasst:

- Bestimmung der a- und b-Farbwerte des Polymers ohne Farbstoffzusatz;

- Festlegung der Gesamtfarbstoffkonzentration in Abhängigkeit der zu erzielenden b-Wert Verschiebung;

- Festlegung des benötigten Mischungsverhältnisses der Farben rot und blau in Abhängigkeit der zu erzielenden a-Wert Verschiebung;

- Dosierung der festgelegten Menge an Farbstoffmischung in die Reaktionsmischung.

EP 2 159 246 A1

**Beschreibung**

Die Erfindung betrifft ein Verfahren zur Herstellung von Polymeren mit neutralem Farbton. Die Besonderheit des Verfahrens besteht in der Möglichkeit, die a- und b-Farbwerte im Lab-Farbraum des Polymers unabhängig voneinander zu korrigieren. Durch die bevorzugte Verwendung von organischen Farbstoffen und den Verzicht auf Kobalt als farbgebende Komponente wird zudem eine Reduktion des Metallgehaltes des Polymers erzielt.

**Stand der Technik**

Während der Herstellung von Polymeren im Allgemeinen und Polyestern im Besonderen finden bekanntermaßen gleichzeitig auch thermische sowie oxidative Abbaureaktionen statt, durch die chromophore Gruppen in den Polymermolekülen gebildet werden. Diese führen zu einer gelblichen Verfärbung des Polymers (siehe z. B. "Polyesterfasern, Chemie und Technologie", Dr. Hermann Ludewig, Akademie-Verlag, Berlin, 1975; "Modern Polyesters: Chemistry and Technology of Polyesters and Copolyesters", John Scheiers und Timothy E. Long (Ed.), John Wiley & Sons, 2003). Diese leichte Gelbfärbung lässt sich auch messtechnisch sehr gut erfassen. Wird dem Polyester während der Herstellung kein Farbstoff zugesetzt, liegt der dann gemessene b-Farbwert (Hunter-Methode) zwischen 2-4 Einheiten.

Zur Minimierung solcher Abbaureaktionen bestehen im Wesentlichen zwei Möglichkeiten, nämlich das Arbeiten unter einer Schutzgasatmosphäre, sowie die Absenkung der Reaktionstemperatur. Während Ersteres noch mit vertretbarem Aufwand zu realisieren ist, ist Letzteres nur bedingt möglich. Da die Temperatur ein wesentlicher Faktor für die Reaktionsgeschwindigkeit ist, muss man sorgfältig abwägen, wie weit eine Temperaturabsenkung bzw. die damit erreichte Farbverbesserung noch mit einer technisch und wirtschaftlich vertretbaren Reaktionsgeschwindigkeit einher geht. Es hat daher nicht an Versuchen gefehlt, eine Fehlfarbe im Produkt zu verhindern. Eine in der Technik dazu etablierte Methode ist der Einsatz von blauen Farbstoffen. Durch die Zugabe einer geeigneten Menge an blauem Farbstoff wird der gelbe Grundton des Polymers zu einem farbneutralen visuellen Eindruck verschoben. Besonders wichtig ist der neutrale Farbton für Verpackungsmaterialien, insbesondere für Lebensmittel und Getränke.

An blauen Farbgebern sind in der Technik besonders oft eingesetzte Kobaltverbindungen, insbesondere Kobaltacetat, bekannt, die in der Regel gemeinsam mit organischen Farbstoffen verwendet werden. Es sind aber auch blaue, rote und violette organische Farbstoffe alleine im Einsatz.

Beispielsweise wird der Einsatz von Kobaltverbindungen in EP 0 061 414 offenbart, wo ein Herstellungsverfahren für ein Polyesterharz ausgeführt wird, das eine Kobaltverbindung, eine Phosphorverbindung und eine Antimonverbindung enthält und zur Produktion von Artikeln hoher Klarheit und neutraler Farbtönung dient. Die Kobaltverbindung ist darin die farbgebende Komponente, die Phosphorverbindung dient der Unterdrückung der katalytischen Wirkung der Kobaltverbindung und die Antimonverbindung dient als Katalysator für die Polykondensation.

In US 6,793,083 wird die Herstellung eines klaren und farbneutralen Polyesters unter Verwendung einer Vormischung aus Kobalt und Phosphor, die dem Produktionsprozess entweder am Ende der Veresterungsstufe oder am Beginn der Polykondensationsstufe zugegeben wird, beschrieben. Auch hier ist Kobalt die farbgebende Komponente und Phosphor der Stabilisator für Kobalt.

Eine allgemeine Beschreibung des Einsatzes von organischen Farbstoffen zur Einstellung der Farbneutralität bei Polyestern findet sich beispielsweise in "Polyester Bottle Resins: Production, Processing, Properties and Recycling", Dr. Ulrich K. Thiele, PETplanet Publisher GmbH, Heidelberg, 2007.

EP 0 854 160 offenbart ein mit Diethylenglykol modifiziertes PET Copolymer von verbesserter Klarheit, bei dem zur Farbeinstellung als farbgebende Substanzen Kobaltverbindungen, Mischungen aus blauen und roten Anthrachinonderivaten, sowie Isochinolinderivate eingesetzt werden.

US 5,372,864 offenbart verschiedene blaue und rote Anthrachinonderivate und Anthrapyridonderivate, die als Farbstoffmischungen eingesetzt werden können, um in Polyestern eine neutrale oder leicht bläuliche Farbe einzustellen. Dabei können die thermostabilen Farbstoffe auch reaktive Gruppen tragen, die es ermöglichen, die Farbstoffe bei der Polykondensation an den Polyester zu binden. Die Vergilbung wird dabei über die Menge an eingesetzter Farbmischung korrigiert, eine Farbtönung in rot-grün Richtung kann mittels der Zusammensetzung der Farbmischung ausgeglichen werden. Es erfolgt hier jedoch keine getrennte Betrachtung des b-Wertes des Polymers im Lab-Farbraum (gemessen nach Hunter), der ein Maß für die Vergilbung ist, und des a-Wertes, der eine Rot-Grün-Verschiebung kennzeichnet. Ebenso wird nicht aufgezeigt, wie die a- und b-Werte getrennt voneinander gezielt zu beeinflussen sind bzw. es ist aufgrund der vorgesehenen Konzentrationen gar nicht möglich. Die Ermittlung von Farbstoffzusammensetzung und -menge für eine möglichst exakte Neutralisierung eines Farbstiches im Polymer erfordert demnach immer erheblichen Versuchsaufwand, da sich der erzielte a-Wert mit dem b-Wert bzw. den dazu eingesetzten Farbstoffmischungen und -mengen ändert.

**Aufgabe der Erfindung**

Die bekannten Kobaltverbindungen als Farbgeber, von denen insbesondere das Kobaltacetat für Lebensmittelverpackungen eingesetzt wird, besitzen eine Reihe von Nachteilen. Neben seiner Eigenschaft als blau-violetter Farbgeber besitzt Kobalt auch katalytische Eigenschaften und wird u. a. als Veresterungskatalysator eingesetzt. Diese Eigenschaft ist bei der Verwendung von Kobalt als Farbgeber jedoch nicht erwünscht. Deshalb wird mit dem Zusatz eines Stabilisators, z. B. Phosphor aus der Phosphorsäure, die Kobaltverbindung stabilisiert und somit die katalytische Reaktion des Kobalts weitestgehend unterbunden.

Gleichzeitig ist jedoch die Bildung und Ausfällung von Kobaltphosphaten möglich, die wiederum eine Erhöhung der Trübungswerte im Polymeren verursacht. Gerade für Verpackungsmittel, insbesondere Getränkeflaschen, ist eine solche Trübung natürlich inakzeptabel. Ferner kann eine Abspaltung von Essigsäure aus dem oft verwendeten Kobaltacetat zu Angriffen auf die Reaktoren, Rohrleitungen und die Destillation führen.

Ein weiteres Problem stellen die Lebensmittelregularien dar, die bestimmte Verbindungen komplett ausschließen oder zumindest deren Konzentration limitieren. Dieses Problem trifft nicht nur auf die Kobaltverbindungen, sondern auch auf die organischen Farbstoffe zu. Erst in letzter Zeit wurden vermehrt Farbstoffe entwickelt und im Markt eingeführt, die über internationale Lebensmittelzulassungen verfügen. Somit war bislang eine frei wählbare Farbgestaltung ohne Zugeständnisse auf die Farben L, a, und b (nach Hunter) und die Trübungswerte im Polymeren kaum möglich.

Heute wird auch immer mehr Wert auf einen möglichst geringen Metallgehalt in Polymeren für Lebensmittelverpackungen gelegt. Die Lebensmittelregularien schreiben zwar den Gesamtmetallgehalt nicht vor, jedoch versucht man, Probleme mit der Migration von Metallen in das Lebensmittel zu umgehen. Daher ist es vorteilhaft, wenn man die Kobaltverbindungen durch organische Farbstoffe ersetzen kann. In der Vergangenheit konnte mit dem Einsatz von Blau/Rotfarbstoffkombinationen allerdings lediglich der b-Wert sehr exakt eingestellt werden. Die Entwicklung des a- und L-Wertes hat sich aus der Farbstoffkombination dann ergeben. Eine unabhängige Anpassung des a- und b-Wertes war nicht möglich.

Die Aufgabe der vorliegenden Erfindung lag demzufolge darin, ein Verfahren zur Farbneutralisierung in Polymeren im Allgemeinen und Polyestern im Besonderen zu finden, das es erlaubt, die Farben L, a und b so unabhängig voneinander wie möglich einstellbar zu gestalten und gleichzeitig die Trübungswerte des Polymeren deutlich mit zu verbessern. Daneben sollten die Lebensmittelregularien dabei so weit wie möglich weltweit eingehalten und Kosten eingespart werden.

**Lösung der Aufgabe**

Gelöst wird die Aufgabe durch das erfindungsgemäße Verfahren zur Herstellung von Polymeren mit neutralem Farbton in einer oder mehreren Reaktionsstufen, wobei dem Prozess an einer Stelle vor Eintritt in die letzte Polyreaktionsstufe ein blauer und/oder roter Farbstoff zugegeben wird, **dadurch gekennzeichnet, dass** die Einstellung eines neutralen Farbtons des Polymers, die bei einer Gesamtfarbstoffkonzentration im Polymer von maximal 3 ppm, bevorzugt maximal 2 ppm, besonders bevorzugt maximal 1 ppm und einem Anteil des blauen Farbstoffes in der Farbstoffmischung von mindestens 50 Gew.-% durchgeführt wird, durch die unabhängige Anpassung der a- und b-Farbwerte im Lab-Farbraum erfolgt und die folgenden Schritte umfasst:

-   Bestimmung der a- und b-Farbwerte des Polymers ohne Farbstoffzusatz;
-   Festlegung der Gesamtfarbstoffkonzentration in Abhängigkeit der zu erzielenden b-Wert Verschiebung;
-   Festlegung des benötigten Mischungsverhältnisses der Farben rot und blau in Abhängigkeit der zu erzielenden a-Wert Verschiebung;
-   Dosierung der festgelegten Menge an Farbstoffmischung in die Reaktionsmischung.

In einer besonders bevorzugten Ausführungsvariante handelt es sich bei dem Verfahren um ein Verfahren zur Herstellung von Polyestern mit neutralem Farbton, das die Reaktionsstufen:

-   mindestens eine Ver-/Umesterungsstufe, in der eine oder mehrere Dicarbonsäuren und/oder eine oder mehrere Dicarbonsäureester mit einem oder mehreren mindestens bifunktionalen Alkoholen ver/umgeestert werden;
-   mindestens eine Vorpolykondensationsstufe, in der das Ver-/Umesterungsprodukt zu niedrigen Molekulargewichten polykondensiert wird;
-   mindestens eine Endpolykondensationsstufe, in der das Vorpolykondensationsprodukt zu einem hochmolekularen Polyesterendprodukt polykondensiert wird;

umfasst.

Es wurde gefunden, dass, wenn eine Neutralisierung des visuellen Farbeindrucks eines Polymers, insbesondere eines Polyesters, mit dem Zusatz sehr geringer Mengen der beiden Farbstoffkomponenten Blau und Rot bzw. deren Gemisch durchgeführt wird, überraschenderweise sowohl der b-Wert als auch der a-Wert des Polymers gezielt und unabhängig voneinander einstellbar sind, der L-Wert sich dann aber aus der Zusammensetzung zwangsläufig ergibt. Die Gesamtfarbstoffkonzentration beträgt hierbei maximal 3 ppm, bevorzugt maximal 2 ppm, besonders bevorzugt maximal 1 ppm. Die Einstellung des b-Wertes erfolgt dabei über die Gesamtmenge an Farbstoffen, wobei der b-Wert abnimmt mit zunehmender Gesamtkonzentration. Der a-Wert ist wiederum einstellbar über das Verhältnis der Blau/Rot-Komponenten. Bei einem Mischungsverhältnis von 80-85 Gew.-% Blau zu 20-15 Gew.-% Rot bleibt der a-Wert im Polymer unverändert. Alle anderen Mischungsverhältnisse von Blau zu Rot können für die a-Werteinstellung eingesetzt werden. Der Anteil an Blau in der Mischung muss jedoch mindestens 50 Gew.-% betragen, damit die Einstellung von a- und b-Wert auch bei höheren Gesamtfarbstoffkonzentrationen unabhängig voneinander bleibt. Der L-Wert ist nicht gezielt steuerbar, sondern er hängt in der Hauptsache von der zugesetzten Farbstoffmenge ab. In wesentlich geringerem Ausmaß wird er auch vom Mischungsverhältnis der Farbstoffe beeinflusst. Bei einer Zugabe von unter 1 ppm an Farbstoff bleibt der L-Wert nahezu unverändert. Im Bereich von 1-3 ppm steigt der Abfall im L-Wert von 2 bis 10 Einheiten bei einer Messung an Polyester-Chips an. Bei einer Vergleichsmessung an Mahlgut zeigt sich ein identischer Verlauf der gemessenen Farbwerte bei entsprechend der veränderten Probengeometrie veränderten Absolutwerten.

In einer bevorzugten Ausgestaltungsvariante sind die eingesetzten Farbstoffe organische Farbstoffe, insbesondere Anthrachinonderivate. Dadurch fällt wegen des Ersatzes der sonst als Farbgeber üblichen Kobaltverbindungen und des Fehlens von sonstigen Metallen in den organischen Farbstoffen eine Quelle für Metalle im Polymer weg. Neben der lebensmittelrelevanten Seite wird hierdurch auch eine Preisreduktion für das Polymer in zweierlei Hinsicht erzielt. Einerseits entfällt das im Vergleich zu den Farbstoffen wesentlich höher dosierte Kobalt und andererseits ist es dadurch möglich, den Gehalt an Phosphorverbindungen zu reduzieren, da diese dann nur noch zur thermischen Stabilisierung im Polykondensationsprozess in einer Menge von etwa 10 ppm benötigt werden und nicht mehr noch zusätzlich die Kobaltverbindung stabilisieren müssen.

Weiterhin verfügen die organischen Farbstoffe besonders bevorzugt über mindestens eine reaktive Gruppe, mittels derer sie kovalent an das Polymer angebunden werden können. Dadurch kann analog zu einer inneren Weichmachung verhindert werden, dass die Farbstoffe später aus dem Polymer diffundieren und in ein Verpackungsgut migrieren können. Sind die Farbstoffe nicht mit reaktiven Gruppen ausgestattet, so sind sie zumindest derart ausgewählt, dass sie sich durch eine besonders gute Löslichkeit im Polymer und eine damit verbundene extrem geringe Migrationsneigung auszeichnen.

Mit den Farben aus der Gruppe der roten und blauen Anthrachinonfarbstoffe, die in den Beispielen noch näher beschrieben werden, ist bei einem Verhältnis von Blau zu Rot von 80 : 20 eine Farbverschiebung zu erzielen, die der einer derzeitig auf dem Markt erhältlichen Standardfarbmischung aus 15 ppm Co und 0,3 ppm Farbstoff Solvent blau Color Index 104 mit dem Ziel von $\Delta b = 3\text{-}4$ und $\Delta a \approx 0$ (gemessen an Chips) vergleichbar ist.

Mit dem erfindungsgemäßen Farbstoffsystem ist es möglich, ohne Übergangsprodukt von einem bestehenden Verfahren mit Kobaltfarbgeber direkt auf die Farbstoffmischung zu wechseln. Ein extra installierter Ansatzbehälter für die Kobaltkomponente kann dann entfallen. Mit dem Wegfall des Kobalts verbessern sich auch die Trübungswerte des Polymers, da es nicht mehr zu Ausfällungen von Kobaltphosphat kommen kann. Das Farbstoffsystem ist bei seinem Einsatz nicht an einen bestimmten Katalysator gebunden, sondern funktioniert sowohl mit Antimon, Titan als auch Mischkatalysatoren aus Antimon und Titan. Auch hier ist ein Wechsel zwischen den einzelnen Katalysatoren ohne Übergangsprodukte möglich. Eine einmal eingestellte Farbtönung bleibt auch nach dem Wechsel erhalten, sofern sich die Färbung des Polymeren durch die Umstellung nicht verändert.

Weitere Ausgestaltungsvarianten sehen die Dosierung der Farbstoffe an verschiedenen Stellen im Prozess vor. So können die Farbstoffe entweder zu der Eduktpaste hinzugegeben werden, die der Veresterungsstufe zugeführt wird, oder direkt in die Veresterungsstufe dosiert werden. Weiterhin kann die Farbstoffmischung zusammen mit dem Veresterungsprodukt oder auch getrennt davon in die Vorpolykondensationsstufe eindosiert werden. Und schließlich ist auch die Dosierung in die Endpolykondensationsstufe möglich, was dann zusammen mit dem Vorpolykondensationsprodukt erfolgt.

Die Farbstoffe können dazu sowohl als Pulver verwendet werden als auch als Suspension und/oder Lösung zum Einsatz kommen. Gemäß einem weiteren Anspruch weist die Suspension und/oder Lösung eine Farbstoffkonzentration von maximal 0,5 Gew.-%, bevorzugt maximal 0,1 Gew.-%, besonders bevorzugt maximal 0,05 Gew.-% auf. Dadurch wird eine gute Durchmischung und Verteilung der Farbstoffe in der Reaktionsmischung sichergestellt. Eine besonders vorteilhafte Variante ist die Dosierung einer Lösung und/oder Suspension der Farbstoffe in der als Monomereinheit eingesetzten multifunktionellen Alkoholkomponente - also z. B. im Fall von PET als Lösung und/oder Suspension in Ethylenglykol - in die Ver-/Umesterungsstufe. Die Dosierung erfolgt über marktübliche Dosiervorrichtungen, wie z. B. Zahnradpumpen, bei Drücken bis maximal 10 barg.

Erfolgt die Verwendung der Farben als Lösung und/oder Suspension, so sieht eine weitere bevorzugte Ausgestaltungsvariante vor, dass diese kontinuierlich gerührt oder im Kreislauf gefahren wird, um die Bildung von Konzentrationsgradienten oder besonders im Fall der Suspensionen von Entmischungen zu verhindern.

Ein Polyester, der nach dem erfindungsgemäßen Verfahren hergestellt worden ist, ist besonders geeignet zur Herstellung von Verpackungsmaterialien, insbesondere Lebensmittelverpackungen und Getränkebehältern, und für die Herstellung von Fasern.

**Beispiele**

Die folgenden Beispiele aus dem Bereich der Polyester sollen der Illustration der Erfindung dienen und sind in keiner Weise einschränkend zu verstehen.

Für die Bestimmung der dargestellten Qualitätsmerkmale wurden nachfolgend beschriebene Analysenmethoden eingesetzt.

Die Messung der Intrinsischen Viskosität (I.V.) erfolgte mittels eines Kapillarviskosimeters nach Ubbelohde mit einer Kapillare der Größe 1c bei 25 °C. Es wurde eine Lösung von 500 mg Polyester in 100 ml eines Gemisches aus Phenol und 1,2-Dichlorbenzol im Verhältnis 3:2 (Gewichtsteile) verwendet.

Die COOH-Endgruppenkonzentration wurde mittels photometrischer Titration einer Lösung des Polyesters in einem Gemisch aus o-Kresol und Chloroform (70:30 Gew.-Teile) mit 0,05 molarer ethanolischer Kalilauge gegen Bromthymolblau bestimmt.

Die Messung des Trübungswertes in "nephelometrischen Trübungseinheiten" (NTU) erfolgte an einer 10 Gew.-%-igen Lösung des Polyesters in Phenol/Dichlorbenzol (3:2 Gew.-Teile) mit einem Nephelometer der Fa. Hach (Typ XR, nach US-Patent 4,198,161) in einer Küvette mit 22,2 mm Durchmesser in Analogie zu der für Wasser gebräuchlichen Norm DIN 38404, Teil 2. Gemessen wird die Intensität des Streulichtes im Vergleich zu einer Formazin-Standardlösung abzüglich des Wertes vom Lösungsmittel (ca. 0,3 NTU).

Die Messung der Farbwerte L und b erfolgte nach Hunter. Die Polyesterchips wurden zunächst im Trockenschrank bei 135 ± 5 °C während einer Stunde kristallisiert. Die Farbwerte wurden danach ermittelt, indem in einem Dreibereichfarbmessgerät der Farbton der Polyesterprobe mit drei Fotozellen, denen je ein Rot-, Grün- und Blaufilter vorgeschaltet war, gemessen wurde (X-, Y- und Z-Werte). Die Auswertung erfolgte nach der Formel von Hunter, wobei

$$L = 10 \cdot \sqrt[2]{Y}$$

und

$$a = \frac{17,5}{\sqrt[2]{Y}} \cdot (1,02 \cdot X - Y)$$

und

$$b = \frac{7,0}{\sqrt[2]{Y}} \cdot (Y - 0,8467 \cdot Z)$$

ist. Der absolute Fehler der Messwerte beträgt für L ± 1 und für a und b jeweils ± 0,3.

Die Beispiele können wie folgt beschrieben werden:

*Herstellung der 0, 02 %-igen Farbstoffsuspension*

Es wurden als blauer Farbstoff Solvent blau Color Index 104 und als roter Farbstoff Solvent rot Color Index 52 der Fa. Lanxess, Deutschland für die Versuche eingesetzt. Diese Farbstoffe entsprechen den Lebensmittlregularien der EU und der FDA. Sie sind für den Einsatz bei der Herstellung von Verpackungen von Lebensmitteln zugelassen.

Beide Farbstoffe wurden in Ethylenglykol in einem Ansatzbehälter unter Rühren bei Raumtemperatur gemischt, die Konzentration nachgemessen und anschließend in einem Arbeitsbehälter mit Rührer für eine kontinuierliche Dosierung bei Raumtemperatur belassen. Die Dosierung in eine kontinuierlich arbeitende Produktionsanlage erfolgte mittels einer Zahnradpumpe bei einem Gegendruck von maximal 10 barg. Im Labormaßstab wurde die Farbstoffsuspension direkt in die Terephthalsäure (PTA)/Ethylenglykol (EG)-Paste drucklos dosiert. Der Glykolanteil der Farbstoffsuspension wird bei der zu dosierenden Glykolgesamtmenge berücksichtigt.

*Herstellung der Polyester*

Für die Tests wurde eine PTA/EG-Paste im Molverhältnis 1:1,8 hergestellt. Zur Herstellung eines Co-Polymers für Flaschen-PET wurden der Paste 2 Gew.-% Isophthalsäure als Pulver unter Rühren beigemengt und diese in einen 5 kg-Rührautoklaven eingesetzt. 200 ppm Antimon (aus Antimontriazetat) als Katalysator und die im Vergleichsversuch eingesetzten 15 ppm Co aus Kobaltacetat, welche hier als Farbkomponente wirken sollten, wurden gleichzeitig mit dem Katalysator in die Paste dosiert. Der Farbstoff Solvent blau Cl 104 wurde für den Vergleichsversuch ebenfalls als 0,02 %-ige glykolische Suspension in die Paste eingetragen.

Die für die dargestellten Beispiele eingesetzten Farbgemische wurden entsprechend der gewünschten Zusammensetzung von Solvent blau Cl 104 und Solvent rot Cl 51 eingewogen und ebenfalls als 0,02 %-ige Suspension der Paste im Rührautoklaven zugesetzt. Die Zusammensetzung der Farbstoffgemische ist Tabelle 1 zu entnehmen.

Die Paste mit allen Additiven ist anschließend nach Aufheizung auf 200 °C innerhalb von 120 min weiter auf 230 °C bei gleichzeitigem Druckanstieg bis auf 3,5 barg geregelt erwärmt worden, anschließend wurde der Druck über 90 min bei gleichzeitiger weiterer Temperaturerhöhung auf Normaldruck entspannt. Im Anschluss erfolgten 15 min Nachreaktion bei einer Temperaturerhöhung bis auf 265 °C. Dann wurden 17 bzw. in Beispiel 5 10 ppm Phosphor als 2 %-ige glykolische Stabilisatorlösung in EG dem Veresterungsprodukt zudosiert. Als Stabilisatorsubstanz wurde 85 %-ige Phosphorsäure ausgewählt. Anschließend erfolgte bei 270 °C die Vorkondensation in zwei Druckstufen, mit 200 mbarg und mit 50 mbarg über eine Zeit von 70 min. Im Anschluss wurde die Polykondensation unter Rühren bei Temperaturen bis maximal 280 °C und unter Vakuum von 0,3-0,5 mbarg über eine Zeit von ca. 170 min durchgeführt. Die wichtigsten Qualitätsparameter des hergestellten PET und der Vergleichsbeispiele sind der anschließenden Tabelle 1 zu entnehmen.

**Tabelle 1**

| Farb-Rezeptur [ppm] | Vgl.- Bsp. 1 | Vgl.- Bsp. 2 | Bsp. 1 | Bsp. 2 | Bsp. 3 | Bsp. 4 | Bsp. 5 |
|---|---|---|---|---|---|---|---|
| Co | - | 15 | - | - | - | - | - |
| Solvent blau Cl 104 | - | 0,3 | - | - | - | - | - |
| P | 17 | 17 | 17 | 17 | 17 | 17 | 10 |
| Farbstoffgemisch: | | | | | | | |
| Solvent blau Cl 104 | - | - | 0,5 | 1,0 | 0,7 | 0,8 | 0,8 |
| Solvent rot Cl 52 | - | - | 0,5 | 0,5 | 0,35 | 0,2 | 0,2 |
| Summe | - | - | 1,0 | 1,5 | 1,05 | 1,0 | 1,0 |
| Verhältnis | - | - | 1:1 | 2:1 | 2:1 | 4:1 | 4:1 |
| **Analysen** | | | | | | | |
| IV [dl/g] | 0,61 | 0,611 | 0,610 | 0,619 | 0,612 | 0,613 | 0,625 |
| COOH [mmol/kg] | 10 | 11 | 12 | 13 | 12 | 13 | 13 |
| Farbe nach Hunter | | | | | | | |
| L | 83,3 | 82,6 | 83,4 | 81,3 | 83,1 | 83,3 | 82,9 |
| a | -1,7 | -1,4 | 0,7 | -0,1 | -0,6 | -1,7 | -1,8 |
| b | 1,6 | -1,1 | -2,5 | -4,5 | -2,6 | -2,6 | -2,4 |
| Trübung [NTU] | 3,1 | 4,4 | 2,1 | 2,2 | 2,1 | 2,0 | 1,6 |

**Patentansprüche**

1.   Verfahren zur Herstellung von Polymeren mit neutralem Farbton in einer oder mehreren Reaktionsstufen, wobei dem Prozess an einer Stelle vor Eintritt in die letzte Polyreaktionsstufe ein blauer und/oder roter Farbstoff zugegeben wird, **dadurch gekennzeichnet, dass** die Einstellung eines neutralen Farbtons des Polymers, die bei einer Gesamtfarbstoffkonzentration im Polymer von maximal 3 ppm, bevorzugt maximal 2 ppm, besonders bevorzugt maximal 1 ppm und einem Anteil des blauen Farbstoffes in der Farbstoffmischung von mindestens 50 Gew.-% durchgeführt wird, durch die unabhängige Anpassung der a- und b-Farbwerte im Lab-Farbraum erfolgt und die folgenden Schritte umfasst:

- Bestimmung der a- und b-Farbwerte des Polymers ohne Farbstoffzusatz;
- Festlegung der Gesamtfarbstoffkonzentration in Abhängigkeit der zu erzielenden b-Wert Verschiebung;
- Festlegung des benötigten Mischungsverhältnisses der Farben rot und blau in Abhängigkeit der zu erzielenden a-Wert Verschiebung;
- Dosierung der festgelegten Menge an Farbstoffmischung in die Reaktionsmischung.

2. Verfahren nach Anspruch 1, **dadurch gekennzeichnet, dass** es ein Verfahren zur Herstellung von Polyestern mit neutralem Farbton ist und die Reaktionsstufen:

- mindestens eine Ver-/Umesterungsstufe, in der eine oder mehrere Dicarbonsäuren und/oder eine oder mehrere Dicarbonsäureester mit einem oder mehreren mindestens bifunktionalen Alkoholen ver/umgeestert werden;
- mindestens eine Vorpolykondensationstufe, in der das Ver-/Umesterungsprodukt zu niedrigen Molekulargewichten polykondensiert wird;
- mindestens eine Endpolykondensationstufe, in der das Vorpolykondensationsprodukt zu einem hochmolekularen Polyesterendprodukt polykondensiert wird;

umfasst.

3. Verfahren nach Anspruch 1 und 2, **dadurch gekennzeichnet, dass** die Farbstoffe organische Farbstoffe sind.

4. Verfahren nach einem der Ansprüche 1 bis 3, **dadurch gekennzeichnet, dass** die Farbstoffe über mindestens eine reaktive Gruppe verfügen, mittels derer sie kovalent an das Polymer angebunden werden können.

5. Verfahren nach einem der Ansprüche 2 bis 4, **dadurch gekennzeichnet, dass** die Zugabe der Farbstoffe zur Eduktpaste oder direkt zur Ver/Umesterung erfolgt.

6. Verfahren nach einem der Ansprüche 2 bis 4, **dadurch gekennzeichnet, dass** die Zugabe der Farbstoffe zur Vorpolykondensation erfolgt.

7. Verfahren nach einem der Ansprüche 2 bis 4, **dadurch gekennzeichnet, dass** die Zugabe der Farbstoffe zusammen mit dem Vorpolykondensationsprodukt in die Endpolykondensationsstufe erfolgt.

8. Verfahren nach einem der Ansprüche 1 bis 7, **dadurch gekennzeichnet, dass** die Zugabe der Farbstoffe als Feststoff erfolgt.

9. Verfahren nach einem der Ansprüche 1 bis 7, **dadurch gekennzeichnet, dass** die Zugabe der Farbstoffe als Suspension und/oder Lösung erfolgt.

10. Verfahren nach Anspruch 9, **dadurch gekennzeichnet, dass** die Suspension und/oder Lösung eine Farbstoffkonzentration von maximal 0,5 Gew.-%, bevorzugt maximal 0,1 Gew.-%, besonders bevorzugt maximal 0,05 Gew.-% aufweist.

11. Verfahren nach einem der Ansprüche 9 und 10, **dadurch gekennzeichnet, dass** die Suspension und/oder Lösung kontinuierlich gerührt oder im Kreislauf geführt wird.

12. Polymerprodukt mit neutralem Farbton, **dadurch gekennzeichnet, dass** es nach einem der Verfahren gemäß Anspruch 1 bis 11 hergestellt wurde.

13. Verwendung eines farbneutralen Polymerproduktes zur Herstellung von Fasern, **dadurch gekennzeichnet, dass** ein Polymerprodukt nach Anspruch 12 verwendet wird.

14. Verwendung eines farbneutralen Polymerproduktes zur Herstellung von Verpackungen, **dadurch gekennzeichnet, dass** ein klares Polymerprodukt nach Anspruch 12 verwendet wird.

# EP 2 159 246 A1

**Europäisches Patentamt**
**European Patent Office**
**Office européen des brevets**

## EUROPÄISCHER TEILRECHERCHENBERICHT

der nach Regel 63 des Europäischen Patentübereinkommens für das weitere Verfahren als
europäischer Recherchenbericht gilt

**Nummer der Anmeldung**

EP 09 16 2050

### EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (IPC) |
|---|---|---|---|
| X | US 2005/245677 A1 (TSUKAMOTO RYOJI [JP]) 3. November 2005 (2005-11-03) * Absätze [0025], [0057], [0068], [0092], [0094] - [0096], [0101], [0132], [0208] * * Beispiel 2 * * Tabellen 1,2,4 * ----- | 2-14 | INV. C08G63/16 C08G63/80 C08L67/02 |
| X | EP 1 541 613 A (MITSUBISHI CHEM CORP [JP]) 15. Juni 2005 (2005-06-15) * Beispiele * * Ansprüche 1-9 * ----- | 2-14 | |

RECHERCHIERTE SACHGEBIETE (IPC)

C08G
C08L
C08K

### UNVOLLSTÄNDIGE RECHERCHE

Die Recherchenabteilung ist der Auffassung, daß ein oder mehrere Ansprüche, den Vorschriften des EPÜ in einem solchen Umfang nicht entspricht bzw. entsprechen, daß sinnvolle Ermittlungen über den Stand der Technik für diese Ansprüche nicht, bzw. nur teilweise, möglich sind.

Vollständig recherchierte Patentansprüche:

Unvollständig recherchierte Patentansprüche:

Nicht recherchierte Patentansprüche:

Grund für die Beschränkung der Recherche:

Siehe Ergänzungsblatt C

| Recherchenort | Abschlußdatum der Recherche | Prüfer |
|---|---|---|
| München | 15. September 2009 | Kaul-Buchberger, Eva |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04E09)

8

Europäisches
Patentamt

European
Patent Office

Office européen
des brevets

**UNVOLLSTÄNDIGE RECHERCHE
ERGÄNZUNGSBLATT C**

Nummer der Anmeldung

EP 09 16 2050

Nicht recherchierte Ansprüche:
      1 sowie 12-14 (teilweise)

Grund für die Beschränkung der Recherche:

Der Anspruch 1 sowie  die Anspüche 12-14 teilweise beziehen sich auf eine extrem großen Anzahl von möglichen Verfahren zur Herstellung von Polymeren. Stützung und Offenbarung im Sinne von Artikel 84 und 83 EPÜ kann jedoch nur für einen sehr kleinen Teil der beanspruchten Verfahren gefunden werden, nämlich für Polyester, siehe die gesamte  Beschreibung und Beispiele. Die Verletzung der einschlägigen Erfordernisse ist so schwerwiegend, dass sie bei der Bestimmung des Recherchenumfangs berücksichtigt wurde  (Regel 63 EPÜ und Richtlinien B-VIII, 3). Der Umfang der Recherche wurde deshalb eingeschränkt.

Deshalb wurde der Anspruch 1 nicht recherchiert, da die Ansprüche 2-11, den durch die Beschreibung gestützten Gegenstand beanspruchen.  Die Recherche der Ansprüche 12-14 wurde auf jene beanspruchten Polymere beschränkt, die durch die Beschreibung gestützt sind, nämlich Polyester.

# EP 2 159 246 A1

**ANHANG ZUM EUROPÄISCHEN RECHERCHENBERICHT
ÜBER DIE EUROPÄISCHE PATENTANMELDUNG NR.**

EP 09 16 2050

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-09-2009

| Im Recherchenbericht angeführtes Patentdokument | Datum der Veröffentlichung | Mitglied(er) der Patentfamilie | Datum der Veröffentlichung |
|---|---|---|---|
| US 2005245677 A1 | 03-11-2005 | AU 2004254229 A1 | 13-01-2005 |
| | | BR PI0406179 A | 26-07-2005 |
| | | CA 2497924 A1 | 13-01-2005 |
| | | EP 1642933 A1 | 05-04-2006 |
| | | HK 1085500 A1 | 25-01-2008 |
| | | WO 2005003235 A1 | 13-01-2005 |
| | | JP 4233568 B2 | 04-03-2009 |
| | | KR 20060028380 A | 29-03-2006 |
| | | MX PA05002148 A | 23-05-2005 |
| EP 1541613 A | 15-06-2005 | AU 2003254811 A1 | 23-02-2004 |
| | | CN 1675284 A | 28-09-2005 |
| | | CN 101062972 A | 31-10-2007 |
| | | WO 2004013203 A1 | 12-02-2004 |
| | | KR 20050028055 A | 21-03-2005 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0061414 A
- US 6793083 B
- EP 0854160 A
- US 5372864 A
- US 4198161 A

**In der Beschreibung aufgeführte Nicht-Patentliteratur**

- **Dr. Hermann Ludewig.** Polyesterfasern, Chemie und Technologie. Akademie-Verlag, 1975
- Modern Polyesters: Chemistry and Technology of Polyesters and Copolyesters. John Wiley & Sons, 2003
- Polyester Bottle Resins: Production. **Dr. Ulrich K. Thiele.** Processing, Properties and Recycling. PET-planet Publisher GmbH, 2007